# EUROPEAN PATENT SPECIFICATION

(11) **EP 1 535 513 B1**
(45) Date of publication and mention of the grant of the patent: **23.05.2007**
(21) Application number: 04256056.5
(22) Date of filing: 30.09.2004
(51) Int. Cl.: A01K 97/12

(54) **A fish-bite detector**
Bissanzeiger zum Angeln
Indicateur de touche pour la pêche

(30) Priority: 25.11.2003 GB 0327393
(43) Date of publication of application: 01.06.2005
(73) Proprietor: FOX INTERNATIONAL GROUP LIMITED, Hainault, Essex IG6 3UT (GB)
(72) Inventor: Fox, Clifford Royston, Danbury, Essex CM3 4PG (GB)
(74) Representative: Crouch, David John

(56) References cited:
- EP-A- 0 325 444
- EP-A- 1 059 029
- EP-A- 1 236 395
- US-A- 5 276 990

## Description

The present invention relates to a fish-bite detector comprising a rod-rest part on opposite sides of which project, in an intended upward direction from a main body of the fish-bite detector, respective ear portions to inhibit lateral movement of a rod when the detector is in use, a movable line engagement member adapted to engage the line of such a rod when in use, sensor means coupled to the movable line engagement member, and signal generating means connected to the sensor to issue a bite detection signal upon movement of the movable line engagement member, in which the signal generating means comprises a light emitting device mounted on a printed circuit board in the main body of the detector and from which extends a light guide to a position at which it is able to transmit light outwardly from the fish-bite detector.

Such a fish-bite detector is disclosed in EP-A-1059029.

The light emitting device is a diode mounted on the printed circuit board, and a light guide extends from the diode to the most adjacent exterior of the detector. However, this has the disadvantage that the location of the illuminated part of the light guide on the external surface of the detector is in a central position on the main body of the detector, which position may be obscured from view by a rod when the detector is in use.

The present invention seeks to provide a remedy.

EP-A-0325444 discloses a fish-bite detector having light-emitting diodes in the ear portions of the detector.

Accordingly, the present invention is directed to a fish-bite detector having the construction set out in the opening paragraph of the present specification, in which the light emitting device is mounted on a rearward side of the printed circuit board, and the light guide extends away from that light emitting device in an intended rearward direction, curves through an angle to an upward direction towards one of the said ear portions, where it curves through a second angle to a position in that ear portion where it is able to transmit light outwardly from the fish-bite detector in a forward direction.

Ideally, each of the said angles is substantially a right angle.

Desirably, a mount is provided at the said position to enable a colour filter to be mounted thereon.

Advantageously, a plurality of filters of different respective colours are provided, any selected one of which can be mounted on the said mount.

An example of a fish-bite detector made in accordance with the present invention will now be described with reference to the accompanying drawings, in which:
- Figure 1: shows a front elevational view of the example;
- Figure 2: shows a side elevational view of the fish-bite detector shown in Figure 1;
- Figure 3: shows a rear elevational view of the fish-bite detector shown in Figures 1 and 2;
- Figure 4: shows a diagrammatic side view of an upper part of the fish-bite detector shown in Figures 1 to 3, on a different scale;
- Figure 5: shows a diagrammatic view from the rear of the fish-bite detector shown in Figures 1 to 3, on a different scale;
- Figure 6: shows a diagrammatic view from the front of the fish-bite detector shown in Figures 1 to 3;
- Figure 7: shows a diagrammatic view from the rear of the fish-bite detector shown in Figures 1 to 3;
- Figure 8: shows a diagrammatic side view of a colour filter of the fish-bite detector shown in Figures 1 to 3; and
- Figure 9: shows a front view along an axis of the colour filter shown in Figure 8.

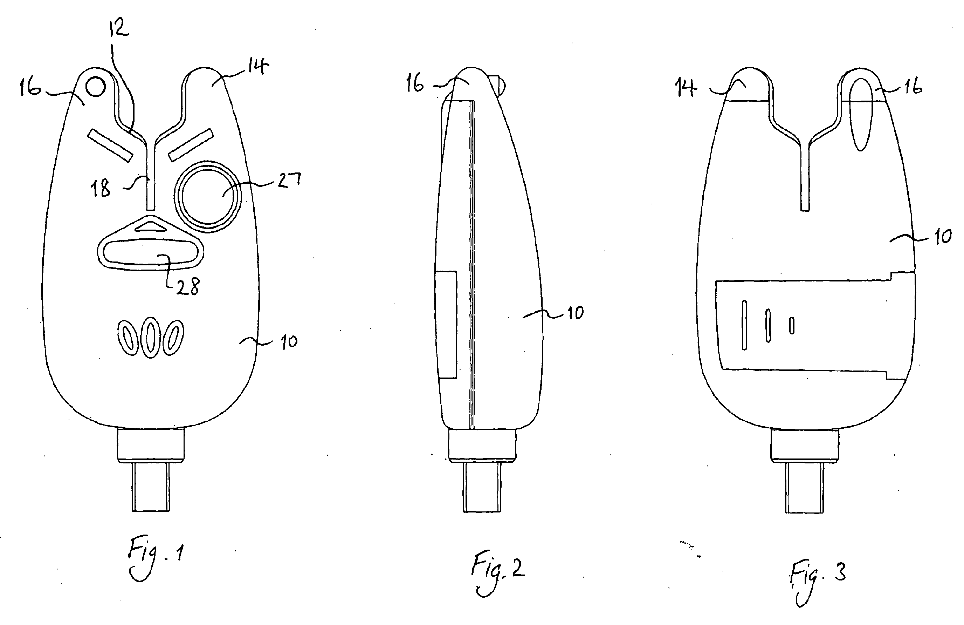

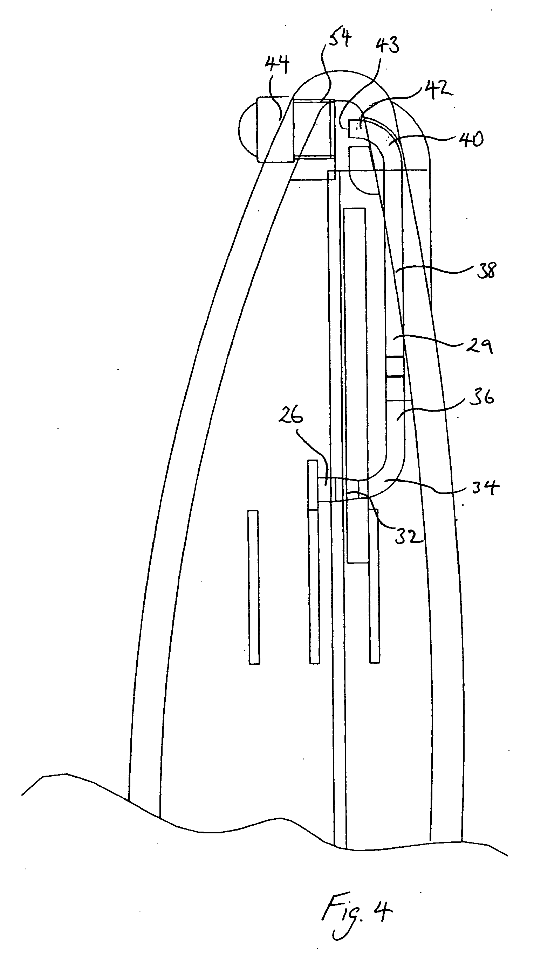

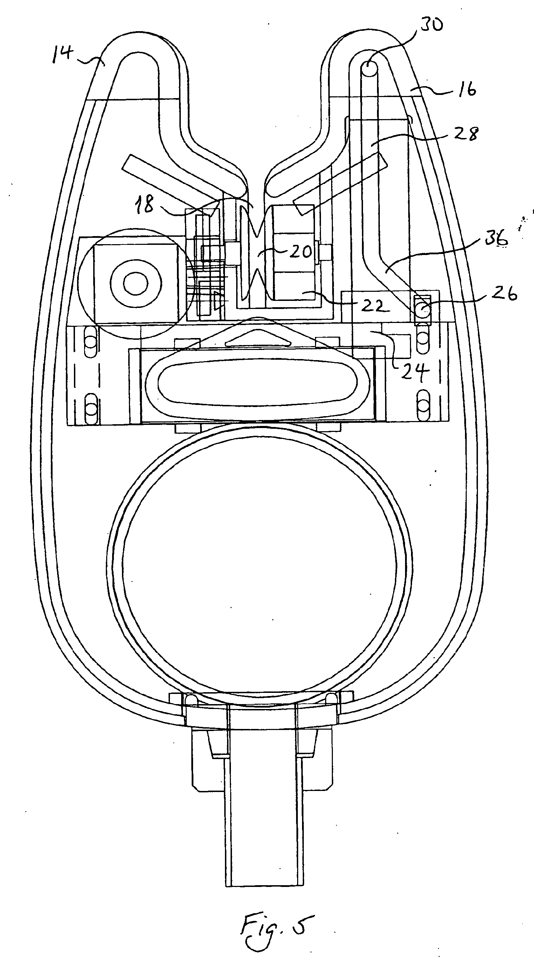

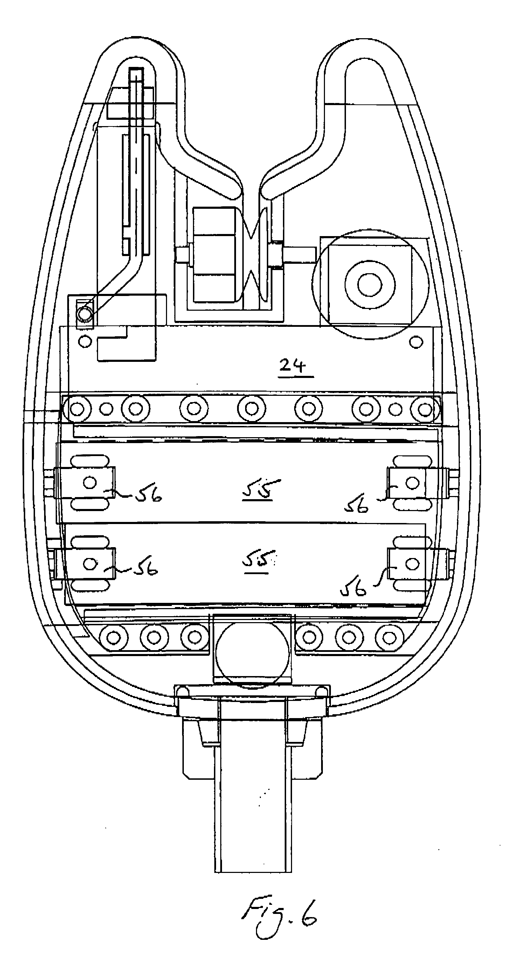

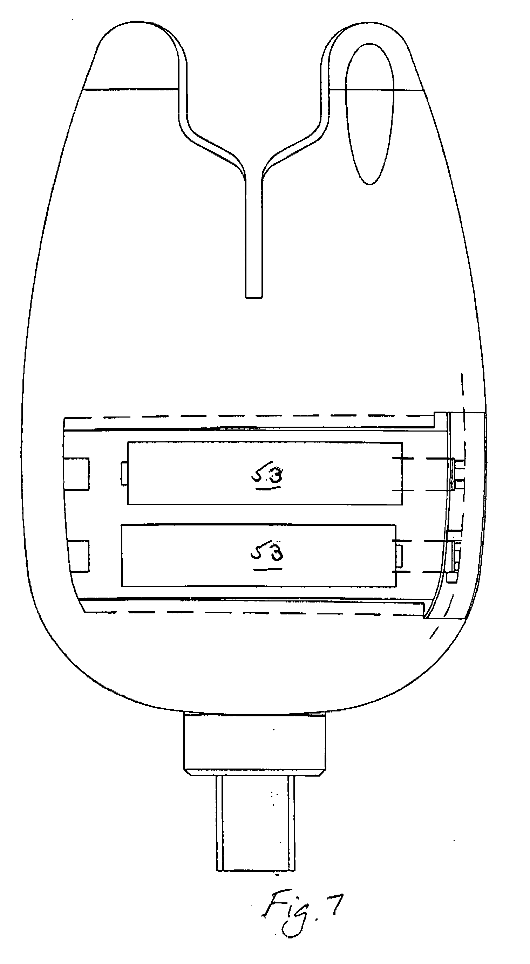

The fish-bite detector shown in Figures 1 to 7 comprises a main casing body 10 provided with an upper rod-rest part 12. Respective ear portions 14 and 16 of the fish-bite detector extend upwardly from the main body 10 on opposite sides of the rod-rest part 12. A slot 18 extends downwardly from the rod-rest part 12, and a rotatable wheel 20 of the detector is accessible via the slot 18. The wheel 20 is rotatable about an axis which is transverse to the slot 18. Sensor means 22 are coupled to the wheel 20 such that rotation of the wheel 20 causes signals to be issued by the sensor means 22.

A printed circuit board 24 mounted in the interior of the main body 10 of the detector is used as a means of coupling the sensor 22 to a light emitting diode 26 mounted on a rear side of the printed circuit board 24. An acrylic circular-section light guide 29, coated to reduce light loss from its sides, extends from the light emitting diode 26 to a position 30 on one of the ear portions 16, at which light from the light emitting diode 26 is transmitted outwardly from the fish-bite detector.

A rock and roll switch 27 is connected to the printed circuit board 24 and enables operating functions of the detector (such as the tone of a buzzer thereof if it has one, and the sensitivity of the detector) to be adjusted with the aid of a functions menu appearing on a liquid crystal display screen 28. The latter is located immediately below the slot 18 and is provided with a moulded waterproof seal.

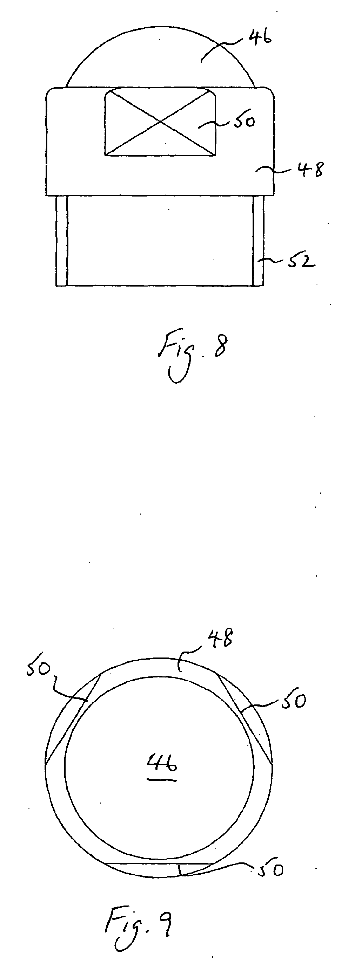

As can be seen more clearly from Figure 4, the light guide 29 has a portion 32 which extends in a rearward direction away from the light emitting diode 26. It then progresses through a curve 34 where it turns through an angle of substantially 90° to a portion 36 which extends upwardly on a slant until it reaches a further portion 38 of the light guide 29 which extends in a substantially vertical direction to a second curved part 40 where the light guide curves through a second angle of substantially 90° to a portion 42 of the light guide which extends in a forward direction and which terminates at a position at its end 43 at which light from the photo-emitting diode 26 can be transmitted outwardly from the fish-bite detector, in a forward direction. The light guide 29 at this end is covered by a colour filter lens 44 which is shown in greater detail in Figures 8 and 9. Thus, it has a generally part-spherical light transmitting outer face 46, a generally cylindrical main body portion 48 provided with three equiangularly spaced flats 50 spaced apart on its outside, and a skirt portion 52 which extends from the main body portion 48 and is received as a screw fit or a tight fit in a corresponding aperture 54 in an external wall of the ear portion 16 of the fish-bite detector. A tool (not shown) may be provided for this purpose, the tool having a shaped end corresponding to that of the outer part of the filter lens 44, to enable the tool to obtain a purchase on the filter lens 44 and to facilitate the screw action or other insertion without damage to the lens or the casing.

The printed circuit board 24 is powered by batteries 53 which are held in respective recesses 55 having appropriate contacts 56 which are in turn connected to the printed circuit board 24.

When the fish-bite detector illustrated in Figures 1 to 7 is in use, a fish rod (not shown) is supported by the rod-support part 12 and a line of the rod engages the wheel 20. In the event that the line moves by rotation with its uppermost portion moving forwards or backwards as a result of a fish-bite, the sensor 22 causes an electrical signal to be sent to the light emitting diode 26. As a result, the latter emits light which travels through the light guide 29 to its far end 43 where it passes through the colour filter 44 and thence outwardly from the fish-bite detector to provide a visual bite signal to the user.

It will be appreciated that the colour filter 44 can be swapped with a filter of a different colour, there being a plurality of such colour filters available to the user or the stockist, each of which can be selectively inserted in the aperture 54 according to the user's taste or colour code system. This reduces the number of different detectors which a stockist must hold, because the colour of the filter lens does not have to be selected until the time of purchase.

Numerous variations and modifications from the illustrated fish-bite detector may occur to the reader without taking the resulting construction outside the scope of the present invention. For example, the portions 36 and 38 of the light guide may be replaced by a single straight portion which extends directly between the curved portions 34 and 40. An O-ring may be inserted under the body portion 48 where it forms a shoulder with the skirt portion 52, to provide a watertight seal against the casing.

## Claims

1. A fish-bite detector comprising a rod-rest part (12) on opposite sides of which project, in an intended upward direction from a main body of the fish-bite detector, respective ear portions (14 and 16) to inhibit lateral movement of a rod when the detector is in use, a movable line engagement member (20) adapted to engage the line of such a rod when in use, sensor means (22) coupled to the movable line engagement member (20), and signal generating means (24, 26) connected to the sensor means (22) to issue a bite detection signal upon movement of the movable line engagement member (20), wherein the signal generating means (24, 26) comprises a light emitting device (26) mounted on a printed circuit board (24) in the main body of the detector and from which extends a light guide (29) to a position at which it is able to transmit light outwardly from the fish-bite detector, **characterised in that** the light emitting device (26) is mounted on a rearward side of the printed circuit board (24), and the light guide (29) extends away from that light emitting device (26) in an intended rearward direction, curves through an angle (34) to an upward direction towards one of the said ear portions(14 or 16), where it curves through a second angle (40) to a position **in that** ear portion (14 or 16) where it is able to transmit light outwardly from the fish-bite detector in a forward direction.

2. A fish-bite detector according to claim 1, **characterised in that** each of the said angles (34, 40) is substantially a right angle.

3. A fish-bite detector according to claim 1 or claim 2, **characterised in that** a mount (54) is provided at the said position to enable a colour filter (44) to be mounted thereon.

4. A fish-bite detector according to claim 3, **characterised in that** a plurality of filters of different respective colours are provided, any selected one of which can be mounted on the said mount (54).

## Patentansprüche

1. Fischanbeißdetektor, der umfasst: ein Rutenauflageteil (12), an dessen gegenüberliegenden Seiten in einer gewünschten Aufwärtsrichtung von einem Hauptkörper des Fischanbeißdetektors jeweilige Ösenabschnitte (14 und 16) vorstehen, um eine seitliche Bewegung einer Rute zu verhindern, wenn der Detektor in Gebrauch ist, ein bewegliches Leineneingrifforgan (20), das so beschaffen ist, dass es in Gebrauch mit der Leine einer solchen Rute in Eingriff gelangt, Sensormittel (22), die mit dem beweglichen Leineneingrifforgan (20) gekoppelt sind, und Signalerzeugungsmittel (24, 26), die mit den Sensormitteln (22) verbunden sind, um bei einer Bewegung des beweglichen Leineneingrifforgans (20) ein Anbeißerfassungssignal auszugeben, wobei die Signalerzeugungsmittel (24, 26) eine lichtemittierende Vorrichtung (26) umfassen, die an einer gedruckten Leiterplatte (24) im Hauptkörper des Detektors angebracht ist und von der sich ein Lichtleiter (29) an eine Stelle erstreckt, an der er Licht von dem Fischanbeißdetektor nach außen senden kann, **dadurch gekennzeichnet, dass** die lichtemittierende Vorrichtung (26) an einer Rückseite der gedruckten Leiterplatte (24) angebracht ist und der Lichtleiter (29) sich von jener lichtemittierenden Vorrichtung (26) in einer gewünschten Rückwärtsrichtung erstreckt, um einen Winkel (34) in eine Aufwärtsrichtung zu einem der Ösenabschnitte (14 oder 16) gekrümmt ist, wo er um einen zweiten Winkel (40) zu einer Stelle in jenem Ösenabschnitt (14 oder 16) gekrümmt ist, an der er Licht von dem Fischanbeißdetektor in einer Vorwärtsrichtung nach außen senden kann.

2. Fischanbeißdetektor nach Anspruch 1, **dadurch gekennzeichnet, dass** jeder der Winkel (34, 40) im Wesentlichen ein rechter Winkel ist.

3. Fischanbeißdetektor nach Anspruch 1 oder Anspruch 2, **dadurch gekennzeichnet, dass** an jener Stelle eine Befestigung (54) vorgesehen ist, um einen Farbfilter (44) daran anzubringen.

4. Fischanbeißdetektor nach Anspruch 3, **dadurch gekennzeichnet, dass** mehrere Filter mit unterschiedlichen Farben vorgesehen sind, wobei irgendeiner von ihnen ausgewählt und an der Befestigung (54) angebracht werden kann.

## Revendications

1. Un indicateur de touche, comprenant une partie de pose de canne (12), sur des parties opposées de laquelle font saillie, dans une direction orientée vers le haut escomptée depuis un corps principal du détecteur de touche, des parties d'oreille (14 et 16) respectives, pour empêcher un déplacement latéral de la canne lorsque le détecteur est en utilisation, un organe de mise en prise avec une ligne mobile (20), adapté pour venir en prise avec la ligne d'une telle canne lorsqu'elle est en utilisation, des moyens détecteurs (22), couplés à l'organe de mise en prise avec la ligne mobile (20), et des moyens de génération de signal (24, 26), connectés aux moyens détecteurs (22) pour envoyer un signal de détection de touche lors du déplacement de l'organe de mise en prise de ligne mobile (20), dans lequel les moyens de génération de signal (24, 26) comprennent un dispositif photoémetteur (26) monté sur une carte de circuit imprimé (24), dans le corps principal du détecteur, et d'où s'étend un guide de lumière (29) allant à une position à laquelle il est en mesure de transmettre de la lumière à l'extérieur depuis le détecteur de touche de pêche, **caractérisé en ce que** le dispositif photoémetteur (26) est monté sur une face arrière de la carte de circuit imprimé (24), et le guide de lumière (29) s'étend à distance de ce dispositif photoémetteur (26) dans une direction vers l'arrière escomptée, s'incurve de la valeur d'un angle (34) vers une direction montante vers l'une desdites parties d'oreille (14 ou 16), auxquels il s'incurve de la valeur d'un deuxième angle (40) pour aller à une position, dans la partie d'oreille (14 ou 16), à laquelle il est en mesure de transmettre de la lumière vers l'extérieur depuis le détecteur de touche de pêche dans une direction avant.

2. Un détecteur de touche de pêche selon la revendication 1, **caractérisé en ce que** chacun desdits angles (34, 40) est sensiblement un angle droit.

3. Un détecteur de touche de pêche selon la revendication 1 ou la revendication 2, **caractérisé en ce qu'**une monture (54) est prévue à ladite position, afin de permettre à un filtre couleur (44) d'être monté sur elle.

4. Un détecteur de touche de pêche selon la revendication 3, **caractérisé en ce qu'**une pluralité de filtres de couleurs respectives différentes sont prévus, dont l'un quelconque ayant été sélectionné peut être monté sur ladite monture (54).
